# EUROPÄISCHE PATENTSCHRIFT

(11) **EP 1 736 228 B1**
(45) Veröffentlichungstag und Bekanntmachung des Hinweises auf die Patenterteilung: **26.11.2008**
(21) Anmeldenummer: 06115280.7
(22) Anmeldetag: 12.06.2006
(51) Int. Cl.: B01D 46/52, B01D 46/10

(54) **Filterelement**
Filter element
Élément filtrant

(30) Priorität: 21.06.2005 DE 202005009836 U
(43) Veröffentlichungstag der Anmeldung: 27.12.2006
(73) Patentinhaber: MANN+HUMMEL GmbH, 71638 Ludwigsburg (DE)
(72) Erfinder: Ruhland, Klaus-Dieter, 67149 Meckenheim (DE); Kopec, Edvard, 67346 Speyer (DE)

(56) Entgegenhaltungen:
- DE-C1- 3 925 511
- US-A1- 2004 011 010
- US-A1- 2005 022 484
- US-B1- 6 485 544

## Beschreibung

### Technisches Gebiet

Die Erfindung betrifft ein Filterelement, insbesondere Sekundärelement für ein Filtersystem im Ansaugtrakt einer Brennkraftmaschine, bestehend aus einem zick-zack-förmig gefalteten Filtermedium, welches von einem umlaufenden, aus Polyurethanschaum bestehenden Rahmen umgeben ist.

### Stand der Technik

Aus der DE 12 99 534 ist ein Filtereinsatz aus gefaltetem Filtermaterial bekannt. Dieser weist eine quer zu den Faltenkanten verlaufende, mit dem Filtermaterial verbundene Klebemasse auf. Diese Klebemasse dient als Abstandshalter.

Bekannte Filter dieser Art für Kraftfahrzeugmotoren benutzen ebenfalls Klebemasse oder Leimraupen als Abstandshalter. Es werden gleichzeitig auch solche Leimraupen an den Seiten des Filtermittels während der Herstellung unterbrechungslos aufgetragen. Beim zick-zack-förmigen Falten des Filtermittels bilden diese Leimraupen die seitliche Abdichtung des Filtereinsatzes.

Das Dokument US 2004/0011010 A1 zeigt ein Filterelement aus einem zick-zack-förmig aufgebauten Filtermaterial, das einen umlaufenden Dichtrand besitzt, der unmittelbar an das Filtermaterial angrenzt. Außerdem ist seitlich am Filterelement ein weiterer Rahmen vorgesehen, der eine Ausfachung besitzt. Diese Ausfachung besteht aus Formteilen, die von dem Rahmen umschlossen werden.

Das Dokument US 6 485 544 B1 beschreibt ein ovales Filterelement, das in eine ovale Kontur eines Gehäuses eingesetzt wird.

Im Zuge der fortschreitenden Entwicklung im Automobilbau und der Hinführung zu kompakten Fahrzeugen steht im Motorraum eines Fahrzeugs immer weniger Platz für ein Filtersystem zur Verfügung. Oft reicht der Platz für eine übliche Rechteckpatrone nicht aus, sodass teilweise auch bereits zwei Filter bzw. zwei Filtersysteme an unterschiedlichen Stellen angeordnet werden.

Es ist Aufgabe der vorliegenden Erfindung, ein Filterelement, insbesondere Sekundärelement für ein Filtersystem im Ansaugtrakt einer Brennkraftmaschine zu schaffen, wobei das Ziel ein Filterelement ist, das sich optimal an die vorgegebenen Raumverhältnisse anpasst. Diese Aufgabe wird durch die Merkmale des unabhängigen Anspruchs 1 gelöst.

### Offenbarung der Erfindung

Der wesentliche Vorteil der Erfindung liegt darin, dass das Filterelement eine ovale Kontur aufweist. Damit besteht die Möglichkeit, auch Bauräume mit einer relativ geringen Höhe optimal auszunutzen. Zur Erzielung einer solchen ovalen Kontur des Filtermediums wird dieses abgeschrägt, das heißt es wird ein Filtermedium geschaffen, das eine an die ovale Kontur optimal angepasste Form aufweist. Der Übergang von dem Filtermedium zu der entsprechenden Öffnung, die mit dem Filterelement auszufüllen ist, erfolgt durch einen Polyurethanschaum-Rahmen, der mit einem Dichtrand versehen ist.

Gemäß einer Ausgestaltung der Erfindung sind die Falten des Filtermediums an den Außenseiten miteinander verklebt, damit eine wirksame seitliche Abdichtung geschaffen wird. Diese Außenseiten sind teilweise oder vollständig in den Polyurethanschaum eingebettet. Zur Verstärkung des Filterelements können die Falten an ihrer Spitze in vorteilhafter Weise mit Verstärkungsstreifen ausgestattet sein. Diese Verstärkungsstreifen sind beispielsweise Leimraupen aus Heißkleber oder einem anderen stabilisierenden Material.

Weiterbildungsgemäß weist eine im Polyurethanschaum-Rahmen angeordnete Nut oder ein dort angeordneter Steg konisch geformte Seitenflächen auf, um auch bei größeren Toleranzen eine zuverlässige Abdichtung zu der Öffnung des Gegenparts zu bewirken.

In einer weiteren Ausgestaltung ist neben dem Rahmen aus Polyurethanschaum ein Stützrahmen aus thermoplastischem Kunststoff vorgesehen. Dieser ist in den Polyurethanschaum eingebettet und hat stabilisierende Eigenschaften. Der Vorteil dieser Verbindung liegt darin, dass einerseits der Polyurethanschaum für eine zuverlässige Abdichtung sorgt, andererseits der Stützrahmen die Stabilität gewährleistet.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Die Erfindung wird nachfolgend anhand von Ausführungsbeispielen näher erläutert. Es zeigt

Figur 1 die perspektivische Darstellung eines Filterelements und

Figur 2 einen Schnitt durch das in Figur 1 gezeigte Filterelement. Ausführungsform(en) der Erfindung

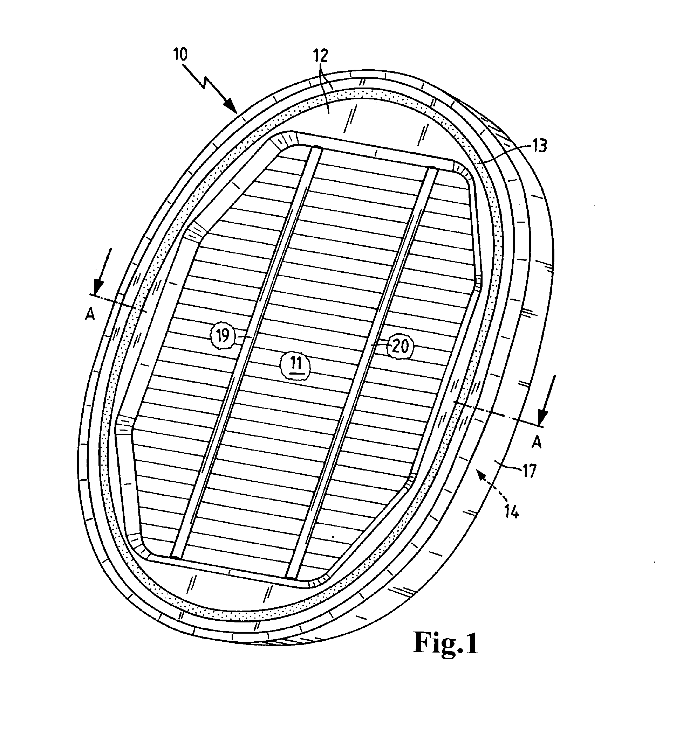

Figur 1 zeigt ein Filterelement 10 in Form eines Sekundärelements für ein Filtersystem im Ansaugtrakt einer Brennkraftmaschine. Diese besteht aus einem zick-zack-förmig gefalteten und plattenförmig ausgestalteten Filtermedium 11, welches im Wesentlichen eine rechteckförmige Form aufweist. Im Bereich der Rundungen des Ovals ist dieses an den Stirnseiten schräg geschnitten und passt sich so dem Verlauf des ovalen Filterelements 10 an. Die Abdichtung des gesamten Elements erfolgt über einen Polyurethanschaum-Rahmen 12, der eine umlaufende Nut 13 besitzt. Die Durchtrittsöffnung für die zu filternde Luft besitzt bei einem minimalen Verschnitt des Filtermediums eine maximal wirksame Filterfläche. Der Polyurethanschaum-Rahmen 12 wird getragen von einem Stützrahmen 14, der aus thermoplastischem Kunststoff, beispielsweise Polyamid oder Polypropylen, besteht.

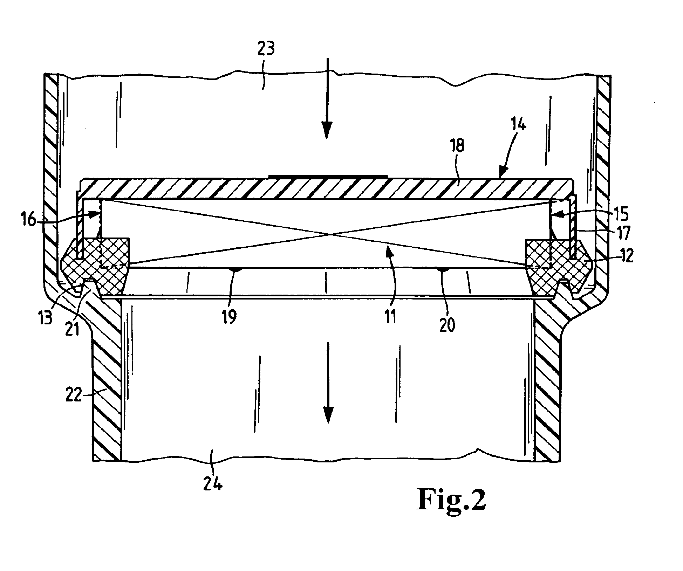

Figur 2 zeigt in einer Schnittdarstellung die in Figur 1 beschriebenen Teile. Gleiche Teile sind mit gleichen Bezugszeichen versehen. Das Filtermedium 11 ist an den Stirnkanten 15, 16 mit einer Klebstoffschicht abgedichtet. Diese Klebstoffschicht erstreckt sich bis in den Bereich des Polyurethanschaum-Rahmens 12. Der Polyurethanschaum-Rahmen ist gleichzeitig Aufnahme für einen umlaufenden Steg 17 des Stützrahmens 14. Der Stützrahmen weist im anströmseitigen Bereich des Filterelements 11 wenigstens eine Rippe 18 auf, die geeignet ist, um das Filterelement aus der dargestellten Position herauszunehmen. Außerdem kann die Rippe mit dem Filtermedium 11 verbunden sein und zur Stabilität des Filtermediums beitragen. Auf der der Rippe 18 gegenüberliegenden Seite des Filtermediums befinden sich zwei durchlaufende Leimraupen 19, 20, die, wie auch in Figur 1 gezeigt, eine Verstärkung des Filtermediums bewirken. Der Polyurethanschaum-Rahmen 12 besitzt, wie in Figur 1 ebenfalls dargestellt, eine umlaufende Nut 13. In diese Nut 13 greift ein Steg 21 eines Gehäuses 22 ein und bewirkt damit eine Abdichtung zwischen der Anströmseite 23 und der Abströmseite 24 des Filtersystems. Anströmseitig ist ein hier nicht dargestelltes Hauptfilterelement angeordnet, das für die Reinigung der Ansaugluft sorgt. Das Sekundärelement besitzt im Wesentlichen die Aufgabe, bei einer Wartung oder einem Defekt des Hauptelements ein Eintritt von Partikeln in den Ansaugtrakt einer Brennkraftmaschine wirksam zu verhindern. Durch die konisch geformten Seitenflächen des Steges 21 bzw. der Nut 13 wird zum einen eine zuverlässige Abdichtung erzielt, zum anderem wird das Handling des Filterelements vereinfacht. Es sind zum Austausch des Filterelements keine großen Abziehkräfte erforderlich, das Filterelement lässt sich, falls erforderlich, einfach aus seiner Position herausnehmen und durch ein neues Filterelement ersetzen.

## Patentansprüche

1. Filterelement, insbesondere Sekundärelement für ein Filtersystem im Ansaugtrakt einer Brennkraftmaschine, bestehend aus einem zick-zack-förmig gefalteten Filtermedium (11), welches von einem umlaufenden, aus Polyurethanschaum bestehenden Rahmen (12) umgeben ist, und wobei zur Abdichtung des Polyurethanschaum-Rahmens an der Öffnung im Rahmen eine umlaufende Nut (13) oder ein umlaufender Steg vorgesehen ist, **dadurch gekennzeichnet, dass** der Rahmen (12) eine im Wesentlichen ovale Kontur aufweist und in einer ovalen Öffnung einsetzbar ist, und wobei das zick-zack-förmig gefaltete, plattenförmige Medium (11) zur Nachbildung der ovalen Kontur abgeschrägte Seitenbereiche aufweist, derart, dass bei minimalem Verschnitt eine möglichst maximal wirksame Filterfläche erzielbar ist, und der Übergang von dem Filtermedium (11) zu der entsprechenden Öffnung, die mit dem Filterelement (10) auszufüllen ist, durch den Polyurethanschaum-Rahmen, der mit einem Dichtrand versehen ist, erfolgt.

2. Filterelement nach Anspruch 1, **dadurch gekennzeichnet, dass** die Falten des Filtermediums an den Außenseiten miteinander verklebt sind und teilweise oder vollständig in den Polyurethanschaum eingebettet sind.

3. Filterelement nach Anspruch 1 oder 2, **dadurch gekennzeichnet, dass** quer zur Faltenrichtung über das gesamte Filtermedium Verstärkungsstreifen in Form von Leimraupen angeordnet sind.

4. Filterelement nach einem der vorherigen Ansprüche, **dadurch gekennzeichnet, dass** die Nut oder der Steg konisch geformte Seitenflächen aufweist, um im Zusammenwirken mit dem Gegenpart an der Öffnung eine zuverlässige Abdichtung zu bewirken.

5. Filterelement nach Anspruch 1, **dadurch gekennzeichnet, dass** die Falten des Filtermediums an den Außenseiten miteinander verklebt und in den Polyurethanschaum eingebettet sind, und wobei ein aus thermoplastischem Kunststoff bestehender Stützrahmen vorgesehen ist, welcher in den Polyurethanschaum eingebettet ist.

## Claims

1. Filter element, in particular secondary element for a filter system in the intake tract of an internal combustion engine, consisting of a zig-zag pleated filter medium (11) which is surrounded by a circumferential frame (12) consisting of polyurethane foam, and a circumferential groove (13) or a circumferential rib being provided at the opening in the frame for sealing the polyurethane foam frame, **characterized in that** the frame (12) features a basically oval contour and can be inserted into an oval opening, and the zig-zag pleated plate-shaped medium (11) featuring chamfered side areas for reproducing the oval contour such that with minimal waste a maximum efficient filtering surface can be obtained, and the transition from the filter medium (11) to the corresponding opening that is to be filled with the filter element (10) being realized by the polyurethane foam frame that has a sealing edge.

2. Filter element according to claim 1, **characterized in that** the pleats of the filter medium are glued with each other at the exterior sides and incorporated partially or completely in the polyurethane foam.

3. Filter element according to claim 1 or 2, **characterized in that** reinforcing strips are arranged at right angles to the direction of the pleats over the complete filter medium in the shape of glue fillets.

4. Filter element according to one of the above claims, **characterized in that** the groove or rib features conically shaped lateral surfaces to ensure, in combination with the counterpart, a reliable sealing at the opening.

5. Filter element according to claim 1, **characterized in that** the pleats of the filter medium are glued with each other at the exterior sides and incorporated in the polyurethane foam, and a supporting frame consisting of thermoplastics is provided for which is incorporated in the polyurethane foam.

## Revendications

1. Elément filtrant, notamment élément secondaire pour un système de filtre dans le système d'admission d'un moteur à combustion interne, composé d'un milieu filtrant plié en accordéon (11) entouré d'un cadre circulaire réalisé en mousse polyuréthane (12), une rainure circulaire (13) ou une nervure circulaire étant prévue au niveau de l'ouverture du cadre pour étancher le cadre en mousse polyuréthane, **caractérisé en ce que** le cadre (12) présente un contour essentiellement ovale et peut être inséré dans une ouverture ovale, et le milieu en forme de plaque et plié en accordéon (11) faisant preuve de zones latérales biseautées afin de reproduire le contour ovale, de sorte à pouvoir obtenir une surface de filtrage la plus efficace possible avec un minimum de chutes, et la transition entre le milieu filtrant (11) et l'ouverture correspondante devant être remplie par le milieu filtrant (10) étant réalisée par un cadre en mousse polyuréthane pourvu d'un collet d'étanchéité.

2. Elément filtrant selon la revendication 1, **caractérisé en ce que** les plis du milieu filtrant sont collés les uns aux autres sur les faces extérieures et sont incorporés de façon partielle ou totale dans la mousse polyuréthane.

3. Elément filtrant selon la revendication 1 ou 2, **caractérisé en ce qu'**en travers du sens des plis, des bandes de renfort sous forme de filets de colle sont disposées sur la totalité du milieu filtrant.

4. Elément filtrant selon une des revendications précédentes, **caractérisé en ce que** la rainure ou la nervure présente des surfaces latérales en forme de cône afin d'assurer, en combinaison avec la contrepartie, une étanchéité fiable au niveau de l'ouverture.

5. Elément filtrant selon la revendication 1, **caractérisé en ce que** les plis du milieu filtrant sont collés les uns aux autres sur les faces extérieures et sont incorporés dans la mousse polyuréthane, et un châssis réalisé en une matière thermoplastique étant prévu, lequel est incorporé dans la mousse polyuréthane.
